# EUROPÄISCHE PATENTSCHRIFT

(11) **EP 4 771 452 B1**
(45) Veröffentlichungstag und Bekanntmachung des Hinweises auf die Patenterteilung: **09.12.2026**
(21) Anmeldenummer: 24765060.9
(22) Anmeldetag: 28.08.2024
(51) Int. Cl.: G05B 17/02

(54) **VERFAHREN ZUR MONTAGE VON FLANSCHVERBINDUNGEN, VERWENDUNG EINER BOLZENSPANNVORRICHTUNG, COMPUTERPROGRAMMPRODUKT, VERWENDUNG EINES COMPUTERPROGRAMMPRODUKTES UND SPEICHERMEDIUM**
METHOD FOR INSTALLING FLANGE CONNECTIONS, USE OF A PIN CLAMPING DEVICE, COMPUTER PROGRAM PRODUCT, USE OF A COMPUTER PROGRAM PRODUCT, AND STORAGE MEDIUM
PROCÉDÉ D'INSTALLATION DE CONNEXIONS À BRIDE, UTILISATION D'UN DISPOSITIF DE SERRAGE DE BROCHE, PRODUIT PROGRAMME D'ORDINATEUR, SON UTILISATION ET SUPPORT DE STOCKAGE

(30) Priorität: 29.08.2023 DE 102023123169
(43) Veröffentlichungstag der Anmeldung: 08.07.2026
(73) Patentinhaber: Schaaf GmbH & Co. KG, 41812 Erkelenz (DE)
(72) Erfinder: KÖLLGES, Ralf, 41812 Erkelenz (DE); LÜDDECKE, Falk, 20355 Hamburg (DE); WEGENER, Filip, 20355 Hamburg (DE)
(74) Vertreter: Geskes, Christoph
(86) Internationale Anmeldenummer: PCT/EP2024/073995
(87) Internationale Veröffentlichungsnummer: WO 2025/045909

(56) Entgegenhaltungen:
- CN-B- 108 875 176
- CN-U- 217 980 767
- US-A1- 2014 350 724
- WEGENER FILIP ET AL: "Numerische Simulation von Vorspannkraftverlusten in Ringflanschverbindungen", DER STAHLBAU, vol. 89, no. 12, 15 September 2020 (2020-09-15), DE, pages 1003 - 1015, XP093006302, ISSN: 0038-9145, Retrieved from the Internet <URL:https://onlinelibrary.wiley.com/doi/full-xml/10.1002/stab.202000055> DOI: 10.1002/stab.202000055
- LIU XUE-CHUN ET AL: "Tension-bend-shear capacity of bolted-flange connection for square steel tube column", ENGINEERING STRUCTURES, ELSEVIER, AMSTERDAM, NL, vol. 201, 19 October 2019 (2019-10-19), XP085906568, ISSN: 0141-0296, [retrieved on 20191019], DOI: 10.1016/J.ENGSTRUCT.2019.109798

## Beschreibung

Die Erfindung betrifft ein Verfahren zur Montage von Flanschverbindungen, eine Verwendung einer Bolzenspannvorrichtung, ein Computerprogrammprodukt und ein Speichermedium.

Im Bereich von Flanschverbindungen, insbesondere solchen, die in windenergetischen Anlagen oder vergleichbaren Strukturen eingesetzt werden, besteht ein stetiger Bedarf an Verbesserungen hinsichtlich der Zuverlässigkeit, Effizienz und Sicherheit der Montageprozesse. EP 3 593 939 A1 offenbart ein Verfahren und eine Vorrichtung zur Montage von Flanschverbindungen. Obwohl dieses Verfahren in vielen Anwendungen zuverlässig und effizient ist, gibt es immer noch Herausforderungen in Bezug auf bestimmte Aspekte, beispielsweise eine Kontrolle von Ermüdungsschädigungen, eine präzise Ausrichtung und Montage der Flanschverbindungen und eine Handhabung von variablen Spaltmaßen zwischen den Flanschen.

CN 217980767 U offenbart ein Befestigungsprüfgerät zur Prüfung der Befestigungsfestigkeit einer Schraube. CN 108875176 B offenbart ein aktives Entwurfsverfahren für eine Form einer Montageklebefläche. Wegener Filip ET AL: "Numerische Simulation von Vorspannkraftverlusten in Ringflanschverbindungen", Der Stahlbau, Bd. 89, Nr. 12, 15. September 2020 (2020-09-15) offenbart, ob in Flanschverbindungen Vorspannkraftverluste zu erwarten sind und durch welche Einflussfaktoren diese maßgeblich bestimmt werden. US 2014/350724 A1 offenbart einen Roboter zum Verschrauben einer Reihe von Schraubenmuttern in einer gemeinsamen runden Flanschverbindung einer Windkraftanlage. LIU XUE-CHUN ET AL: "Tension-bend-shear capacity of bolted-flange connection for square steel tube column", ENGI-NEERING STRUCTURES, ELSEVIER, AMSTERDAM, NL, Bd. 201, 19. Oktober 2019 offenbart eine Studie, bei der quadratische Stahlrohrsäulen durch verschraubte Flansche anstelle des traditionellen Schweißens verbunden werden.

Vor diesem Hintergrund besteht die Aufgabe der vorliegenden Erfindung darin, ein verbessertes Verfahren zur Montage von Flanschverbindungen bereitzustellen. Insbesondere soll das Verfahren in der Lage sein, variable Spaltmaße effektiv zu handhaben. Weiterhin sollte das Risiko von Ermüdungsschäden zu minimieren und dabei den Montageprozess zu optimieren sein.

Die Aufgabe wird erfindungsgemäß gelöst mittels eines Verfahren zur Montage von Flanschverbindungen wobei die Flanschverbindung zumindest einen ersten Flansch, einen zweiten Flansch und eine Anzahl von Bolzensystemen aufweist, wobei der erste und der zweite Flansch jeweils eine Mehrzahl von Flanschausnehmungen aufweist, wobei die Flanschausnehmungen des ersten Flansches zu den Flanschausnehmungen des zweiten Flansches ausrichtbar sind, wobei die Bolzensysteme jeweils zumindest einen Bolzen, eine Mutter und ein Widerlager aufweisen, umfassend die Schritte:
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer bolzensystemtypischen Steifigkeit C_{Bolzen} und Ermitteln einer axialen Steifigkeit des Flanschkörpers der vorgespannten Flanschverbindung,
c. Analytische und/oder numerische Untersuchung zur Festlegung der maximal zulässigen Spaltmaße Sₙ, so dass eine Ermüdungsschädigung des Bolzensystems unter Berücksichtigung spezifischer Randbedingung eine definierte Gesamtschädigung nicht überschreitet ,
d. Analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ, welche für eine Ermüdungssicherheit der Verbindung während des Vorspannens erreicht werden muss,
e. Einbringung der Bolzensysteme in die zueinander ausgerichteten Flanschausnehmungen des ersten Flansches und des zweiten Flansches,
f. Montieren der Bolzenspannvorrichtung an einen Bolzen,
g. Aufbringen einer Montagevorspannkraft Fₘ auf den Bolzen und Ermitteln einer erreichten Gesamtsteifigkeit Cᵢₛₜ des verspannten Flansches,
h. Vergleich der erreichten Gesamtsteifigkeit Cᵢₛₜ mit der zu erreichenden Gesamtsteifigkeit Cₛₒₗₗ
i. Anziehen der Mutter des Bolzensystems mit einer Montagespannkraft Fₛₒₗₗ, wenn der Wert der erreichten Gesamtsteifigkeit Cᵢₛₜ in Relation zur aufgebrachten Montagevorspannkraft Fₘ größer oder gleich der zu erreichenden Gesamtsteifigkeit Cₛₒₗₗ in Relation zur aufgebrachten Montagevorspannkraft Fₘ ist.

Weiterhin wird die Aufgabe erfindungsgemäß gelöst mittels einer Verwendung einer Bolzenspannvorrichtung umfassend ein Gehäuse, eine Zugeinheit, ein Wegmessgerät, eine Zugkraftermittlung und eine Recheneinheit, wobei mittels des Wegmessgeräts eine erreichte Gesamtsteifigkeit Cᵢₛₜ messbar ist, wobei mittels der Recheneinheit eine numerisch und/oder analytisch ermittelte zu erreichende Gesamtsteifigkeit Cₛₒₗₗ speicherbar ist, zur Durchführung eines oben genannten Verfahrens.

Weiterhin wird die Aufgabe erfindungsgemäß gelöst mittels eines Computerprogrammprodukts umfassend Befehle, die bewirken, dass eine Bolzenspannvorrichtung das erfindungsgemäße Verfahren ausführt, mit einem Datensatz umfassend zumindest eine Referenzwerteschar, die ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit C_{Bolzen} für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße Sₙ, so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ, welche für eine Ermüdungssicherheit der Verbindung während des Vorspannens erreicht werden muss,
wobei die Referenzwerteschar jeweils einen Sollwert einer Relation einer numerisch und/oder analytisch ermittelten zu erreichenden Gesamtsteifigkeit Cₛₒₗₗ zu einer Montagevorspannkraft Fₘ wieder gibt, wobei eine erreichte Gesamtsteifigkeit Cᵢₛₜ in Relation zu einer aufgebrachten Montagevorspannkraft Fₘ an einem Bolzensystem mit dem Sollwert vergleichbar ist, so dass mittels des Computerprogrammproduktseine qualitative Aussage über die Flanschverbindung an einer Stelle eines Bolzensystems ausgebbar ist, wobei je nach qualitativer Aussage mittels des Computerprogrammproduktes veranlasst wird, dass eine Mutter des Bolzensystems angezogen wird oder dass das Bolzensystem gelöst wird.

Weiterhin wird die Aufgabe erfindungsgemäß gelöst mittels einer Verwendung eines Computerprogrammprodukts gemäß der oben genannten Verwendung oder dem oben genannten Verfahren.

Weiterhin wird die Aufgabe erfindungsgemäß gelöst mittels eines Speichermediums, auf dem das erfindungsgemäße Computerprogramm gespeichert ist, umfassend einen Datensatz, umfassend zumindest eine Referenzwerteschar, die jeweils einen Sollwert einer Relation einer numerisch und/oder analytisch zu erreichenden Gesamtsteifigkeit Cₛₒₗₗ zu einer Montagevorspannkraft Fₘ wieder gibt, wobei die Referenzwerteschar ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit C_{Bolzen} für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße Sₙ, so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ, welche für eine Ermüdungssicherheit der Verbindung während des Vorspannens erreicht werden muss.

Es wird ein Verfahren zur Montage von Flanschverbindungen vorgeschlagen wobei die Flanschverbindung zumindest einen ersten Flansch, einen zweiten Flansch und eine Anzahl von Bolzensystemen aufweist, wobei der erste und der zweite Flansch jeweils eine Mehrzahl von Flanschausnehmungen aufweist, wobei die Flanschausnehmungen des ersten Flansches zu den Flanschausnehmungen des zweiten Flansches ausrichtbar sind, wobei die Bolzensysteme jeweils zumindest einen Bolzen, eine Mutter und ein Widerlager aufweisen, umfassend die Schritte:
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer bolzensystemtypischen Steifigkeit C_{Bolzen} und Ermitteln einer axialen Steifigkeit des Flanschkörpers der vorgespannten Flanschverbindung,
c. Analytische und/oder numerische Untersuchung zur Festlegung der maximal zulässigen Spaltmaße Sₙ, so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ, welche für eine Ermüdungssicherheit der Verbindung während des Vorspannens erreicht werden muss,
e. Einbringung der Bolzensysteme in die zueinander ausgerichteten Flanschausnehmungen des ersten Flansches und des zweiten Flansches,
f. Montieren der Bolzenspannvorrichtung an einen Bolzen,
g. Aufbringen einer Montagevorspannkraft Fₘ auf den Bolzen und Ermitteln einer erreichten Gesamtsteifigkeit Cᵢₛₜ des verspannten Flansches,
h. Vergleich der erreichten Gesamtsteifigkeit Cᵢₛₜ mit der zu erreichenden Gesamtsteifigkeit Cₛₒₗₗ.

Bevorzugt wird das vorgeschlagene Verfahren in der angegebenen Reihenfolge ausgeführt.

Das vorgeschlagene Verfahren kann insbesondere zur Montage von Flanschverbindungen, insbesondere solchen, die in windenergetischen Anlagen oder ähnlichen Strukturen eingesetzt werden. Bei der Flanschverbindung handelt es sich um zumindest einen ersten Flansch und einen zweiten Flansch. Dieser Aufbau ermöglicht eine gezielte und präzise Montage, was die Zuverlässigkeit und Stabilität der Verbindung erhöht.

In modernen Windkraftanlagen, die eine Schlüsseltechnologie zur Erzeugung erneuerbarer Energien darstellen, sind Flanschverbindungen von zentraler Bedeutung. Solche Verbindungen, bestehend aus mindestens einem ersten und einem zweiten Flansch, sind häufig an kritischen Punkten der Anlage zu finden, wie etwa an der Verbindung zwischen dem Turm und der Nabe oder zwischen einzelnen Turmsegmenten. Die mechanische Integrität dieser Verbindungen ist entscheidend, da sie den dynamischen und statischen Lasten standhalten müssen, die durch den Betrieb der Windkraftanlage entstehen. Diese Lasten variieren je nach Windgeschwindigkeit, -richtung und weiteren Umweltfaktoren.

Eine Herausforderung bei der Gestaltung von Flanschverbindungen in Windkraftanlagen ist die Anpassung an diese variablen Belastungen. Während der Betriebszeit der Anlage wird die Verbindung ständig wechselnden Kräften ausgesetzt, was zu zyklischer Belastung und potenziellen Ermüdungserscheinungen führt. Darüber hinaus können Faktoren wie Korrosion, insbesondere in Offshore-Anwendungen, oder Temperaturschwankungen die Integrität der Flanschverbindung beeinträchtigen. Eine ordnungsgemäße Montage, Verschraubung und Dichtung der Flansche sind daher unerlässlich, um Undichtigkeiten, vorzeitigen Verschleiß oder gar katastrophale Ausfälle zu vermeiden.

Zudem besteht die Herausforderung darin, dass jede Flanschverbindung, auch wenn sie nach standardisierten Designs gefertigt wird, aufgrund von Herstellungsabweichungen einzigartig ist. Ein Aspekt sind Spalten zwischen den miteinander zu verbindenden Flanschen. Diese Spaltmaße können durch verschiedene Faktoren beeinflusst werden, wie etwa Fertigungstoleranzen, ungleichmäßige Lastverteilung, Setzungsprozesse oder thermische Ausdehnung.

Ein unerwünschtes oder unkontrolliertes Spaltmaß kann zu einer Vielzahl von Problemen führen. Zum einen kann ein zu großer Spalt die Dichtwirkung zwischen den Flanschen beeinträchtigen, was zu Leckagen und in weiterer Folge zu Korrosionsprozessen führen kann, besonders in maritimen Umgebungen, in denen Windkraftanlagen häufig salzhaltiger Luft ausgesetzt sind. Ein nicht optimaler Spalt kann insbesondere die Lastübertragung und somit die Gesamtstabilität der Verbindung beeinträchtigen. Dies kann insbesondere bei den dynamischen und zyklischen Lasten, denen Windkraftanlagen ausgesetzt sind, kritisch werden.

Zusätzlich zur mechanischen Integrität kann ein zu großes Spaltmaß auch Schwingungsprobleme verursachen. Schwingungen können sich über den Turm fortpflanzen und sowohl die Lebensdauer der Anlage als auch ihre Effizienz negativ beeinflussen.

Des Weiteren ist zu beachten, dass ein unkontrollierter Spalt auch eine potenzielle Gefahr für das Bolzensystem darstellt. Ein Spalt kann zu ungleichmäßiger Lastverteilung auf die Bolzen führen, was wiederum das Risiko von Ermüdungsbrüchen erhöht.

Aus all diesen Gründen ist es von entscheidender Bedeutung, sowohl bei der Konstruktion als auch beim Betrieb von Windkraftanlagen, die Spaltmaße zwischen den Flanschen präzise zu definieren, zu überwachen und gegebenenfalls anzupassen.

Die effiziente und sichere Verbindung von mindestens zwei Flanschen in Windkraftanlagen ist von entscheidender Bedeutung. Der Entwurf und die Implementierung solcher Verbindungen erfordern ein Verständnis der zugrunde liegenden mechanischen Prinzipien sowie der spezifischen Anforderungen und Herausforderungen, die im Kontext von Windenergieanlagen auftreten.

Der erste und zweite Flansch weisen jeweils Flanschausnehmungen auf, die zueinander ausrichtbar sind. In diese zueinander ausgerichteten Ausnehmungen werden Bolzensysteme eingebracht. Ein Bolzensystem umfasst bevorzugt jeweils zumindest einen Bolzen - bevorzugt einen Gewindebolzen, eine Mutter und ein Widerlager. Das Wiederlager kann beispielsweise als Schraubenkopf oder Gegenmutter ausgestaltet sein. Die Bolzensysteme können auch zumindest eine Unterlegscheibe, die bevorzugt unter die Mutter und/oder das Widerlager anordenbar ist, aufweisen. In einer Ausgestaltung ist vorgesehen, dass die Mutter und/oder die Gegenmutter ein Mutterinnengewinde aufweist, das dem Außengewinde eines vorgespannten Bolzens entspricht. Weiter bevorzugt ist eine Auflagefläche der Mutter derart gestaltet, dass keine Unterlegscheibe mit dieser verwendet werden muss. Bevorzugt weist die Mutter eine ebene Auflagefläche auf, die weiter bevorzugt rechtwinklig zu einer Gewindeachse der Mutter ausgebildet ist. Ist das Widerlager als Gegenmutter gestaltet, gelten die obigen Ausführungen zur Mutter ebenfalls für die Gegenmutter des Widerlagers. Der Bolzen ist bevorzugt ein Gewindebolzen, dessen Außengewinde mit dem Innengewinde der Mutter und gegebenenfalls der Gegenmutter korrespondiert oder dessen Geometrie des Außengewindes, bevorzugt bei Aufbringung einer Maximalkraft auf den Bolzen, mit dem Mutterinnengewinde und gegebenenfalls dem Gegenmutterinnengewinde korrespondiert. In einer Ausgestaltung ist die Schraubenverbindung beziehungsweise das Bolzensystem eine HV-Schraubengarnitur.

Ein Beispiel eines Bolzensystems ist ein Gewindebolzen, der zwei Muttern umfasst. Ein weiteres Beispiel eines Bolzensystems ist ein Gewindebolzen, der zwei Muttern und zwei Unterlegscheiben umfasst. Ein weiteres Beispiel eines Bolzensystems ist eine Gewindeschraube, die eine Mutterumfasst. Ein weiteres Beispiel eines Bolzensystems ist eine Gewindeschraube, die eine Mutterumfasst und zwei Unterlegscheiben umfasst. Eine Gewindeschraube jedoch ist kein Teil eines Bolzensystems noch ein Bolzensystem selbst, da keinen Bolzen aufweisend. Ein Bolzen weist anders als eine Gewindeschraube keinen Kopf auf.

Die Bolzenspannvorrichtung kann beispielsweise als Drehmomentschlüssel, elektrischer Drehmomentschrauber, hydraulischer Drehmomentschrauber, pneumatischer Drehmomentschrauber oder insbesondere hydraulische Bolzenspannvorrichtung ausgestaltet sein. Bevorzugt kann die Bolzenspannvorrichtung hydraulisch eine Vorspannung in dem Bolzensystem beziehungsweise dem Bolzen erzeugen. Die Bolzenspannvorrichtung wird in einer Ausgestaltung von dem Monteur oder einem Roboter bedient. Bevorzugt sind die Bolzensysteme hydraulisch verspannbar. Durch den Einsatz von Hydraulik wird eine genaue, wiederholbare Verspannung des Bolzensystems ermöglicht. Diese Methode ermöglicht es, die Bolzen mit einer Präzision und einer Kraft zu spannen, die mit herkömmlichen manuellen Methoden nicht zu erreichen ist.

Im Schritt a. des Verfahrens erfolgt die Ermittlung von Flanschparametern zumindest des ersten Flansches und des zweiten Flansches der Flanschverbindung. Die Flanschparameter, die erfasst und analysiert werden, umfassen eine Reihe von physischen und materialtechnischen Merkmalen, die für die jeweilige Anwendung spezifisch sind. Beispielhaft können Flanschparameter eine Dicke des Flansches, ein Außendurchmesser des Flansches, ein Innendurchmesser des Flansches, mit dem Flanschen verbundene Strukturen - wie beispielsweise eine Turmwandung, ein Abstand der Flanschausnehmungen, ein Durchmesser der Flanschausnehmungen sowie Art und/oder Material der verwendeten Bolzensysteme sein.

Beispielhafte Aufzählungen sind im Sinne der Erfindung als nicht abschließend anzusehen, sondern können im Rahmen des allgemeinen Fachwissens ergänzt werden.

Im Schritt b. des Verfahrens wird analytisch ein bolzensystemtypischen Dehnverhalten, eine axialen Steifigkeit C_{Bolzen} für den Bolzen und Ermitteln einer axialen Steifigkeit des Flanschkörpers der vorgespannten Flanschverbindung ermittelt. Bevorzugt wird ebenfalls ein Kompressionsverhalten einer Bolzenspannvorrichtung ermittelt. Mittels der Kenntnis der Werte für bolzensystemtypisches Dehnverhalten, für die axiale Steifigkeit C_{Bolzen} für den Bolzen und für die axiale Steifigkeit des Flanschkörpers der vorgespannten Flanschverbindung und weiter bevorzugt dem Kompressionsverhalten einer Bolzenspannvorrichtung können vorteilhaft weitere Berechnungen erfolgen.

Das Dehnverhalten des Bolzensystems beschreibt, wie sich das Bolzensystem, insbesondere der Bolzen, unter Last verlängert oder verkürzt. Es basiert auf den inhärenten Materialeigenschaften des Bolzens und kann durch klassische mechanische Tests und Analysen, wie zum Beispiel Zugversuche, bestimmt werden. Das Dehnverhalten gibt Aufschluss darüber, wie der Bolzen auf unterschiedliche Lasten reagieren wird, insbesondere in Bezug auf elastische und plastische Deformationen. Sind die Materialeigenschaften bekannt, kann das Dehnverhalten mathematisch bestimmt werden.

Die axiale Steifigkeit des Bolzens, ist ein Maß für eine Widerstandsfähigkeit des Bolzens gegenüber axialen Kräften. Die axiale Steifigkeit wird durch die Geometrie des Bolzens, das Material und die Art der Anwendung beeinflusst. Insbesondere kann die Steifigkeit nach VDI 2230 von Dezember 2014 berechnet werden.

Die axiale Steifigkeit des Flanschkörpers der vorgespannten Flanschverbindung wird bevorzugt aus den gemessenen Prozessgrößen während des Vorspannens der Bolzen bestimmt.

Beispielsweise kann das Spannen des Bolzensystems beziehungsweise des Bolzens, weiter bevorzugt das Vorspannen folgenden Ablauf haben:
- Aufbringen einer Zugkraft bis zu einer Rückstellkraft beziehungsweise bis ein Rückstelldruck, beispielsweise von etwa 30 bar bis etwa 100 bar, erreicht wird,
- Aufbringen einer Zugkraft auf einen Bolzen des Bolzensystems, bis eine bestimmte Maximalkraft erreicht ist, und bevorzugt Ermitteln, weiter bevorzugt kontinuierliches Ermitteln während der Aufbringung der Zugkraft, eines Weges, der mit einer Bolzenlängung, einer Kompression der Bolzenspannvorrichtung und/oder einer Flanschkompression der Flanschverbindung korreliert,
- Nachdrehen der Mutter des Bolzensystems bevorzugt mit einem bestimmten Drehmoment.
- Ablassen der Zugkraft auf etwa 0 N,
- Aufbringen der Zugkraft, die der Montagevorspannkraft entspricht.
- In einer Ausgestaltung ist vorgesehen, dass vor dem Aufbringen der Montagevorspannkraft die vorhergehenden Schritte nochmals wiederholt werden.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Vor, während und/oder nach jedem Schritt erfolgt bevorzugt eine Dokumentation des Verfahrens. Die genannten Schritte zur Vormontage des Bolzensystems sind nicht limitierend. Weitere Arbeitsfolgen können auch mehrfach ineinander geschachtelt in weiteren Ausgestaltungen möglich sein, wobei bevorzugt alle Schritte dokumentiert werden. In einer Ausgestaltung ist vorgesehen, dass Parameter des Spannens der Schraubverbindung mittels der Rechnereinheit dokumentiert werden. Parameter können beispielsweise eine Schrauben-Identifikationsnummer, eine Maximalkraft, ein Längungswert, eine Bolzenspannvorrichtungskompression, eine Flanschkompression, eine erreichte Montagevorspannkraft, Ergebnisse einer Wegmessung und/oder Winkelmessung beim Spannen der Schraubenverbindung, Name des Monteurs, eine Bezeichnung der Firma, Flanschbezeichnung, Durchmesser der Schraubenverbindung, eine von der Bolzenspannvorrichtung aufgebrachte Zugkraft, ein hydraulischer Druck, eine Lösekraft, eine Chargennummer insbesondere aller verwendeten Werkzeuge, eine Chargennummer beziehungsweise eine Kennung der Schraubenverbindung beziehungsweise des Bolzensystems beziehungsweise dessen Einzelteile, eine Softwareversion der Recheneinheit, ein Datum, eine Uhrzeit, eine Bezeichnung der durchgeführten Operation, eine qualitative Aussage über den Erfolg des Spannens des Bolzensystems, eine Umgebungstemperatur und/oder ein Drehwinkel der Mutter der Schraubenverbindung sein. Bevorzugt kann die Dokumentation des Spannens der Schraubenverbindungen vor, während und/oder nach dem Spannen der Schraubenverbindung beziehungsweise des Bolzensystems durch die Bolzenspannvorrichtung erfolgen.

Im Sinne der Erfindung wird unter "Flanschkörper" ein integraler oder zusammengesetzter Bestandteil verstanden, mittels dem zwei oder mehr Teile mechanisch miteinander verbindbar sind. Insbesondere umfasst der Flanschkörper zumindest den ersten und den zweiten Flansch. Der Flanschkörper ist typischerweise kreisförmig oder ringförmig und weist Ausnehmungen oder Öffnungen auf, die zur Aufnahme von Befestigungselementen, wie zum Beispiel der Bolzensysteme, dienen. Er kann aus verschiedenen Materialien bestehen, einschließlich, aber nicht beschränkt auf, Metalle, Legierungen, Kunststoffe oder Kompositmaterialien. Der Flanschkörper dient insbesondere nicht nur der physischen Verbindung, sondern stellt in einer Ausführungsform auch sicher, dass zwischen den verbundenen Teilen eine dichte Abdichtung besteht, um das Eindringen von Flüssigkeiten, Gasen oder anderen unerwünschten Elementen zu verhindern. In einer Ausführungsform kann der Flanschkörper auch dazu beitragen, die Lasten oder Spannungen, die auf die Verbindung einwirken, gleichmäßig zu verteilen, um die Langlebigkeit und Zuverlässigkeit der gesamten Konstruktion zu erhöhen.

Im Sinne der Erfindung ist unter einer Montagevorspannkraft Fₘ eine Kraft auf den Bolzen zu verstehen, die kleiner als oder gleich wie die Montagespannkraft Fₛₒₗₗ ist, die für die fertige Montage angestrebt wird. So wird die Montagevorspannkraft Fₘ zur Vorspannung des Bolzensystems von der Bolzenspannvorrichtung aufgebracht, insbesondere zur Ermittlung der erreichten Gesamtsteifigkeit Cᵢₛₜ. Die Montagespannkraft Fₛₒₗₗ ist die Kraft, die durch die Bolzenspannvorrichtung aufgebracht wird, wenn die Mutter des Bolzensystems verschraubt wird. So ist die Montagespannkraft Fₛₒₗₗ diejenige Kraft, mit der das Bolzensystem letztlich verspannt werden soll. In einer Ausführungsform ist die Montagespannkraft Fₛₒₗₗ etwa gleich der Montagevorspannkraft Fₘ. In einer weiteren Ausführungsform ist die Montagevorspannkraft Fₘ etwa 0,1 bis etwa 0,95, bevorzugt etwa 0,5 bis etwa 0,95, weiter bevorzugt etwa 0,7 bis etwa 0,95 Mal die Montagespannkraft Fₛₒₗₗ. Im Sinne der Erfindung ist ein "Vorspannen" des Bolzensystems beziehungsweise der Flanschverbindung ein Aufbringen der Vorspannkraft auf den Bolzen beziehungsweise der Bolzen der Flanschverbindung.

In Schritt c. des vorgeschlagenen Verfahrens ist die analytische und/oder numerische Untersuchung zur Festlegung der maximal zulässigen Spaltmaße Sₙ vorgesehen, so dass eine Ermüdungsschädigung des Bolzensystems unter Berücksichtigung spezifischer Randbedingung eine definierte Gesamtschädigung nicht überschreitet.

Unter "Ermüdungsschädigung" wird im Sinne der Erfindung ein schrittweiser Materialversagensprozess verstanden, der durch wiederholte Lastzyklen oder Spannungsschwankungen verursacht wird, die typischerweise deutlich unter der maximalen Festigkeit des Materials liegen können. Diese wiederholten Belastungen führen zu mikroskopischen Rissen im Material, die sich mit der Zeit ausbreiten können, bis die strukturelle Integrität des Bauteils beeinträchtigt wird und es schließlich versagt. In Bezug auf die Flanschverbindungen insbesondere in Windkraftanlagen bezieht sich die Ermüdungsschädigung insbesondere auf die schrittweise Schwächung des Bolzensystems und anderer mit diesem verbundener Komponenten, die durch die konstanten und dynamischen Lasten, denen die Anlage während ihres Betriebs ausgesetzt ist, beeinflusst wird.

Unter "Gesamtschädigung" wird im Sinne der Erfindung die kumulative Beschädigung eines Materials oder einer Struktur, insbesondere der Flanschverbindung beziehungsweise des Bolzensystems, über die gesamte Nutzungsdauer oder über einen bestimmten Zeitraum hinweg verstanden. Dies beinhaltet sowohl die anfänglichen Mikrodefekte als auch die resultierenden Makroschäden, die aus wiederholten Belastungszyklen resultieren können. Im Kontext der vorliegenden Erfindung betrifft die Gesamtschädigung insbesondere das Bolzensystem und die zugehörigen Komponenten innerhalb der Flanschverbindung beispielsweise von Windkraftanlagen. Im Vergleich zur "Ermüdungsschädigung", die spezifisch den schrittweisen Versagensprozess durch wiederholte Lastzyklen beschreibt, umfasst die Gesamtschädigung alle Arten von Schäden, einschließlich, aber nicht beschränkt auf Ermüdung, Korrosion, mechanische Beschädigung und andere Umwelteinflüsse. Das Ziel ist es, durch das vorgeschlagene Verfahren die Gesamtschädigung zu minimieren, wobei ein besonderer Fokus auf der Verhinderung von Ermüdungsschäden liegt, da diese in der Regel zu den kritischsten und schwer vorhersehbaren Schadensarten in solchen Strukturen gehören.

Die numerische und/oder analytische Untersuchung ist vorteilhaft, da die Größe dieser Spaltmaße in direktem Zusammenhang mit der Langlebigkeit und Sicherheit des Bolzensystems steht. Wenn die Spaltmaße außerhalb der zulässigen Grenzen liegen, könnten sie unter den enormen Lasten, denen Windkraftanlagen insbesondere in turbulenten Windverhältnissen ausgesetzt sind, zu vorzeitigen Ermüdungsschädigungen des Bolzensystems führen.

Durch die numerische und/oder analytische Untersuchung wird sichergestellt, dass die Spaltmaße innerhalb von Toleranzen liegen, die die strukturelle Integrität des Bolzensystems nicht gefährden. Sie berücksichtigt nicht nur die physischen Dimensionen des Bolzensystems und der Flanschverbindung, sondern auch spezifische Randbedingungen, die beispielsweise durch das jeweilige Material, das Umgebungs- und Betriebsklima oder auch durch spezielle Anwendungsanforderungen gegeben sein können. Durch die genaue Definition der maximal zulässigen Spaltmaße wird eine definierte Gesamtschädigungsgrenze gesetzt, die nicht überschritten werden darf, um die optimale Funktion und Lebensdauer der gesamten Flanschverbindung sicherzustellen.

Ein weiterer Vorteil dieser numerischen und/oder analytischen Untersuchung im Schritt c. besteht darin, dass sie nicht nur das unmittelbare Verhalten der Bolzensysteme unter verschiedenen Lastszenarien bewertet, sondern auch dabei hilft, vorbeugende Maßnahmen zu definieren, um potenzielle Schwachstellen zu erkennen und zu beheben, bevor sie zu kritischen Problemen werden. Das Resultat ist eine robuste, sichere und effiziente Flanschverbindung, die speziell für die Anforderungen und Herausforderungen von Windkraftanlagen entwickelt wurde.

Bevorzugt umfasst eine numerische Untersuchung zumindest eine Simulation. Bevorzugt wird die numerische Untersuchung mittels einer Finite-Elemente-Methode FEM vorgenommen. Insbesondere werden eine Mehrzahl von Spaltmaßen unter vorgegebenen Belastungszuständen über eine Zeit simuliert. Unter einer analytischen Ermittlung wird eine Berechnung mit insbesondere bekannten, gemessenen oder numerisch ermittelten Werten verstanden, vorzugsweise mittels zumindest einer mathematischen Formel.

Im Sinne der Erfindung beziehen sich "Randbedingungen" auf bestimmte externe Faktoren oder Szenarien, die bei der Bewertung und dem Design der Flanschverbindungen beispielsweise für Windkraftanlagen berücksichtigt werden müssen. Hierbei handelt es sich insbesondere um Belastungszustände, Flanschparameter und/oder Vorspannkräfte.

"Belastungszustände" sind spezifische Krafteinwirkungen, die während des Betriebs der Windkraftanlage auf die Flanschverbindung einwirken. Beispielsweise in der Umgebung einer Windkraftanlage spielen Windlasten eine entscheidende Rolle, da sie kontinuierlichen und variierenden Druck auf die Struktur der Anlage ausüben. Diese Windlasten sind nicht konstant und können stark variieren, abhängig von Wetterbedingungen, geografischer Lage und Jahreszeit. Sie wirken über einen definierten Zeitraum auf die Flanschverbindung und können sowohl stetige als auch böige Natur haben. Die Auswirkungen dieser Belastungen müssen bei der Auslegung, Montage und Überwachung der Flanschverbindung berücksichtigt werden, um eine sichere Verbindung der Flansche der Windkraftanlage zu gewährleisten.

In einer Ausgestaltung ist vorgesehen, dass die spezifischen Randbedingungen, insbesondere Belastungszustände, zumindest teilweise einer Markow-Matrix P für Belastungszustände und Teilschädigungen der Flanschverbindung entnommen sind, aus der sich ein Gesamtschädigungswert D_{MAR} je Bolzensystem ergibt, der kleiner 1 ist.

Die Komplexität der Belastungszustände und Teilschädigungen kann durch die Nutzung einer Markow-Matrix P abgebildet werden. Diese Matrix ermöglicht eine systematische und mathematische Betrachtung der variablen Belastungszustände und deren Auswirkungen auf die Integrität der Flanschverbindung.

Die Markow-Matrix ist ein Werkzeug aus der Wahrscheinlichkeitstheorie, das verwendet wird, um die Übergangswahrscheinlichkeiten zwischen verschiedenen Zuständen in einem System über die Zeit zu beschreiben. Diese Matrix ist besonders nützlich, wenn die Wahrscheinlichkeit eines Zustandswechsels nur vom aktuellen Zustand und nicht von vorherigen Zuständen abhängt, ein Konzept, das als Markow-Eigenschaft bezeichnet wird.

Im Kontext der Flanschverbindung werden die Zustände der Markow-Matrix so definiert, dass sie verschiedene Belastungszustände und Teilschädigungen repräsentieren. Jedes Element der Matrix gibt die Wahrscheinlichkeit an, dass die Flanschverbindung von einem bestimmten Zustand zum Beispiel einem bestimmten Belastungszustand zu einem anderen Zustand zum Beispiel einer bestimmten Teilschädigung übergeht. Insbesondere werden nur die Belastungszustände einer Markow-Matrix entnommen und nicht die Übergangswahrscheinlichkeit zum Versagen der Bolzenverbindung. Bevorzugt wird die Markow-Matrix von einem Flanschhersteller oder Windkraftanlagenhersteller bereitgestellt. In einer Ausführungsform werden die Belastungszustände an bereits bestehenden Flanschverbindungen beziehungsweise Windkraftanlagen gemessen.

Der Gesamtschädigungswert D_{MAR}, der aus der Markow-Matrix P extrahiert wird, bietet eine quantitative Einschätzung des Schadens, der dem Bolzensystem zugefügt wird. Ein Wert von D_{MAR}, der kleiner als 1 ist, deutet darauf hin, dass das System noch nicht völlig beschädigt ist und dass die Flanschverbindung trotz der variablen Belastungszustände und Teilschädigungen weiterhin funktionstüchtig bleibt.

Durch die Anwendung dieses Verfahrens wird eine präzise und adaptive Bewertung der Flanschverbindung ermöglicht, die die variierenden Belastungszustände und deren potenziellen Auswirkungen auf die Lebensdauer und Stabilität der Verbindung berücksichtigt. Dadurch können bei der Montage der Flanschverbindung potenzielle Schwachstellen identifiziert und proaktive Maßnahmen ergriffen werden, um die Langlebigkeit und Sicherheit der Windkraftanlage zu gewährleisten. Insbesondere können die Belastungszustände insbesondere aus der Markow-Matrix für die FEM-Analyse herangezogen werden, um Flanschverbindungen mit unterschiedlichen Spaltmaßen, Montagevorspannkräften und/oder Montagekräften zu simulieren.

Eine numerische Untersuchung ist beispielsweise die Durchführung einer Anzahl bevorzugt einer Mehrzahl von Simulationen einer Flanschverbindung, insbesondere FEM-Analysen, die die ermittelten Parameter der Flanschverbindung aufweist, bei einer Mehrzahl definierter unterschiedlicher Belastungszustände und einer Mehrzahl unterschiedlicher Montagevorspannkräfte Fₘ, die auf die Bolzensysteme aufbringbar sind, wobei bei einer einzelnen Simulation jeweils zumindest ein definierter Spalt zwischen den Flanschen umfassend ein größtes Spaltmaß Sₙ simuliert wird.

Eine numerische Untersuchung ist insbesondere eine Durchführung einer Vielzahl von Simulationen, die spezifisch auf die Parameter der Flanschverbindung zugeschnitten sind. Diese Simulationen modellieren das Verhalten der Flanschverbindung bei definierten Belastungszuständen. Es werden bevorzugt verschiedene Montagevorspannkräfte Fₘ berücksichtigt, die auf die Bolzensysteme aufgebracht werden. Bevorzugt werden eine Mehrzahl unterschiedlicher Spalten zwischen den Flanschen bei der numerischen Untersuchung berücksichtigt beziehungsweise nummerisch untersucht. Bevorzugt wird mittels der numerischen Untersuchung ein definierter Spalt ermittelt, der das größte Spaltmaß Sₙ aufweist. Die Betrachtung dieses größten Spaltmaßes ist wesentlich, da es die kritischsten Szenarien darstellt, unter denen die Flanschverbindung funktionieren muss.

Vorteilhaft kann mittels der numerischen Untersuchung eine Relation von Spaltmaß zu Montagevorspannkraft und/oder Montagekraft ermittelt werden, die anzeigt, dass die Flanschverbindung einen ausreichenden Kraftschluss aufweist oder dass die Flanschverbindung keinen ausreichenden Kraftschluss aufweist. Das größte Spaltmaß Sₙ ist das größte simulierte Spaltmaß, dass bei einer Montagevorspannkraft und/oder Montagekraft einen ausreichenden Kraftschluss aufweist.

In einer beispielhaften Ausgestaltung des Schrittes c werden zunächst die spezifischen Randbedingungen identifiziert, wie Materialeigenschaften, Umgebungsbedingungen und spezifische Anforderungen der Anwendung. Anschließend erfolgt die Ermittlung der verschiedenen Belastungszustände, die während des Betriebs auf die Flanschverbindung einwirken, wie statische und dynamische Lasten, Windlasten bei Windkraftanlagen und variable Lastzyklen.

Beispielsweise wird daraufhin die Markow-Matrix aufgebaut. Die Zustände, die in der Markow-Matrix P abgebildet werden sollen, werden definiert, um verschiedene Belastungszustände und Teilschädigungen der Flanschverbindung zu repräsentieren. Es werden Daten zu den Übergangswahrscheinlichkeiten zwischen den definierten Zuständen erhoben, beispielsweise aus experimentellen Messungen oder der Literatur. Die Belastungszustände werden beispielsweise an bestehenden Flanschverbindungen, beispielsweise in Windkraftanlagen, gemessen. Mit diesen Daten wird die Matrix P aufgebaut, welche die Übergangswahrscheinlichkeiten zwischen den verschiedenen Belastungszuständen und Teilschädigungen enthält.

Weiterhin beispielhaft folgt eine erste Berechnung zur Abschätzung der Spaltmaße basierend auf den Daten aus der Markow-Matrix. Hierbei wird beispielsweise der Gesamtschädigungswert DMAR - Damage Accumulation Ratio - berechnet, der bevorzugt kleiner als 1 sein muss, um anzuzeigen, dass das System nicht vollständig beschädigt ist.

In der numerischen Untersuchung wird beispielsweise zunächst ein numerisches Modell der Flanschverbindung erstellt. Die Parameter für die Simulation werden festgelegt, einschließlich unterschiedlicher Spaltmaße, Belastungszustände und Montagevorspannkräfte. Die Belastungszustände aus der Markow-Matrix werden in die Simulationen integriert. Die Übergangswahrscheinlichkeiten aus der Markow-Matrix fließen bevorzugt nicht in die Simulation mit ein. Die Markow Matrix wird vornehmlich dazu verwendet um Belastungen und Belastungsabfolgen in der Simulation zu verwenden. Eine Vielzahl von FEM-Simulationen wird durchgeführt, um das Verhalten der Flanschverbindung unter verschiedenen Szenarien zu modellieren. Unterschiedliche Spaltmaße werden simuliert und die resultierenden Spannungen und Verformungen unter den durch die Markow-Matrix definierten Belastungszuständen analysiert.

Bevorzugt werden die Ergebnisse der FEM-Simulationen ausgewertet, die Spannungsverteilungen analysiert und/oder kritische Bereiche identifiziert. Die Ergebnisse werden mit den zulässigen Grenzwerten für Ermüdungsschädigung und Gesamtschädigung verglichen. Das größte Spaltmaß Sn, bei dem die strukturelle Integrität der Flanschverbindung noch gewährleistet ist, wird identifiziert.

Beispielsweise wird in einer Windkraftanlage ein hochfester Stahl für die Bolzensysteme und die Flansche verwendet, der verschiedenen Belastungen wie Meeresklima und hohen Windlasten ausgesetzt ist. Die Mindestlebensdauer beträgt beispielsweise 20 Jahre. Zustände wie verschiedene Windgeschwindigkeiten, Betriebszyklen und Ruhephasen werden definiert. Übergangswahrscheinlichkeiten werden erhoben und in der Markow-Matrix P abgebildet. Initiale Berechnungen zur Abschätzung des Spaltmaßes ergeben beispielsweise 0,2 mm. Ein 3D-Modell der Flanschverbindung wird erstellt und die Simulationen festgelegt. Belastungszustände gemäß der Markow-Matrix, verschiedene Spaltmaße und Vorspannkräfte, wobei insbesondere die Übergangswahrscheinlichkeiten ignoriert werden, werden bei der Simulation berücksichtigt. Die FEM-Analyse wird durchgeführt, die Spannungsverteilungen und Verformungen analysiert. Das größte Spaltmaß Sn wird ermittelt, beispielsweise 0,25 mm, bei dem die Spannungen noch innerhalb der zulässigen Grenzwerte liegen. Die Ergebnisse werden validiert, das Modell bei Bedarf angepasst und dokumentiert.

Bevorzugt wird in Schritt c. ausschließlich eine numerische Untersuchung, weiter bevorzugt ausschließlich eine FEM-Simulation, zur Festlegung der maximal zulässigen Spaltmaße vorgenommen.

In Schritt d. des vorgeschlagenen Verfahrens ist vorgesehen, dass eine analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ erfolgt, welche für eine Ermüdungssicherheit der Verbindung währende des Vorspannens erreicht werden muss.

Im Allgemeinen bezieht sich eine ermittelte oder einer zu erreichende Gesamtsteifigkeit C auf die Widerstandsfähigkeit der Flanschverbindung gegenüber Verformungen. Eine höhere Steifigkeit bedeutet, dass die Verbindung resistenter gegenüber externen Kräften ist, die darauf wirken. Insbesondere ist die Gesamtsteifigkeit ein Maß für den Kraftschluss zwischen dem ersten und dem zweiten Flansch. Ist beispielsweise kein Spalt zwischen den Flanschen vorhanden ist die Gesamtsteifigkeit größer, als wenn ein Spalt vorhanden ist. Im Allgemeinen wird unter einer Relation einer ermittelten oder einer zu erreichenden Gesamtsteifigkeit C der Flanschverbindung zur Montagevorspannkraft Fᵥₒᵣ im Sinne der Erfindung ein Wert verstanden, der sich aus der Division C/Fᵥₒᵣ ergibt.

Im Sinne der Erfindung wird unter "Ermüdungssicherheit" verstanden, dass ein Bauteil, insbesondere das Bolzensystem und damit verbundene Komponenten der Flanschverbindung, über die gesamte vorgesehene Lebensdauer der Anwendung hinweg in der Lage ist, den wiederholten Belastungszyklen und Spannungsschwankungen standzuhalten, ohne Anzeichen eines schrittweisen Materialversagens aufzuweisen. Die Ermüdungssicherheit stellt somit sicher, dass trotz der wiederholten und variablen Lasten, denen beispielsweise eine Windkraftanlage ausgesetzt ist, keine unerwünschten mikroskopischen Risse oder Materialschwächungen entstehen. Es wird speziell darauf abgezielt, die strukturelle Integrität der Flanschverbindung und/oder der Bolzenverbindung über den vorgesehenen Zeitraum hinweg zu gewährleisten und somit ein vorzeitiges Versagen oder Schäden durch Ermüdungserscheinungen zu verhindern.

Insbesondere wird ein maximales Spaltmaß Sₘₐₓ aus den größten Spaltmaßen Sₙ ermittelt, bei dem die Simulation eine definierte Gesamtschädigung je Bolzensystem nicht überschreitet, Das maximale Spaltmaß Sₘₐₓ wird bevorzugt aus der Sammlung der gemessenen oder simulierten Spaltmaße als das größte ermittelte Spaltmaß definiert. Dieses Maß gibt den größten Abstand zwischen den beiden Flanschen in der Verbindung an, die insbesonder grade noch als Ermüdungssicher gilt. Bei der Analyse und Simulation der Flanschverbindung wird ermittelt, ob bei dem maximalen Spaltmaß Sₘₐₓ die definierte Gesamtschädigung je Bolzensystem nicht überschritten wird.

Das Setzen dieser Schädigungsgrenze und die Ermittlung des zugehörigen maximalen Spaltmaßes gewährleisten, dass die Flanschverbindung über ihre gesamte Lebensdauer hinweg sowohl funktionsfähig bleibt als auch eine ausreichende Sicherheitsmarge gegenüber potenziellen Ermüdungsschäden aufweist. In Schritt e. werden die Bolzensysteme in die zueinander ausgerichteten Flanschausnehmungen des ersten Flansches und des zweiten Flansches eingebracht und in Schritt f. die Bolzenspannvorrichtung an einen Bolzen montiert.

In Schritt g. wird eine Montagevorspannkraft Fₘ auf den Bolzen aufgebracht und eine erreichte Gesamtsteifigkeit Cᵢₛₜ der verspannten Flansche ermittelt. Hierzu wird insbesondere mittels Wegmessung bei der Verspannung des Flansches eine Längenänderung ermittelt, die sich zumindest aus der Längung des Bolzens sowie der Kompression der Flanschverbindung und der Bolzenspannvorrichtung ermitteln lässt. Da die durch die Bolzenspannvorrichtung aufgewendete Kraft bekannt ist, lassen sich anhand des im Vorfeld des Verfahrens ermittelten Längungsverhaltens des Bolzens und des bekannten Kompressionsverhaltens der Bolzenspannvorrichtung die Kompression der Flanschverbindung ermitteln. Die erreichte Gesamtsteifigkeit Cᵢₛₜ berechnet sich wie folgt: ${C}_{ist} = \left(ΔI/{F}_{m}\right) - {C}_{Bolzen}$

Hierbei ist ΔI die gemessene Längenänderung beim Aufbringen der von der Bolzenspannvorrichtung aufgebrachte Montagevorspannkraft Fₘ, wobei bevorzugt die Kompression der Bolzenspannvorrichtung bereits herausgerechnet wurde. Weiterhin ist C_{Bolzen} die bevorzugt nach VDI2230 von Dezember 2014 berechnete Bolzensteifigkeit.

Aus der EP 3 566 816 A1, auf die vollumfänglich Bezug genommen wird, ist beispielsweise ein Verfahren zu Verschraubung von Bolzen bekannt, bei der eine Spannkraft auf den Bolzen aufgebracht wird, bis eine bestimmte Maximalkraft erreicht ist, und ein Längungswert ermittelt wird, der mit einer Bolzenlaengung, einer Bolzenspannvorrichtungskompression und einer Flanschkompression der Flanschverbindung korreliert. Das Verfahren der EP 3 566 816 A1 kann mit dem vorgeschlagenen Verfahren verwendet werden.

In Schritt h. des Verfahrens wird die erreichte Gesamtsteifigkeit Cᵢₛₜ mit der zu erreichenden Gesamtsteifigkeit Cₛₒₗₗ verglichen. Der Vergleich ermöglicht eine qualitative Aussage über die Ermüdungssicherheit der Flanschverbindung, insbesondere an der Stelle des grade angezogenen Bolzens. Bevorzugt kann die Aussage getroffen werden, dass die Flanschverbindung keine ausreichende Ermüdungssicherheit aufweist, wenn die erreichte Gesamtsteifigkeit Cᵢₛₜ kleiner ist als die zu erreichende Gesamtsteifigkeit Cₛₒₗₗ. Bevorzugt kann die Aussage getroffen werden, dass die Flanschverbindung eine ausreichende Ermüdungssicherheit aufweist, wenn die erreichte Gesamtsteifigkeit Cᵢₛₜ größer oder gleich ist als die zu erreichende Gesamtsteifigkeit Cₛₒₗₗ.

Bevorzugt ist vorgesehen, dass ein Ergebnis des Vergleiches aus Schritt h. ausgegeben wird. Weiter bevorzugt wird das Ergebnis des Vergleiches aus Schritt h. an die Bolzenspannvorrichtung weitergegeben. Weiter bevorzugt wird auf Grundlage des Ergebnisses des Vergleiches aus Schritt h. die Bolzenspannvorrichtung angesteuert. Weiter bevorzugt wird auf Grundlage des Ergebnisses des Vergleiches aus Schritt h., bevorzugt mittels der Bolzenspannvorrichtung, bevorzugt automatisiert, das Bolzensystem nochmal mit der Montagevorspannkraft vorgespannt oder das Bolzensystem gelöst. Weiter bevorzugt wird auf Grundlage des Ergebnisses des Vergleiches aus Schritt h., bevorzugt mittels der Bolzenspannvorrichtung, bevorzugt automatisiert, das Bolzensystem nochmal mit der Montagevorspannkraft vorgespannt oder das Bolzensystem gelöst oder die Bolzenspannvorrichtung von dem Bolzensystem gelöst.

Erfindungsgemäß ist vorgesehen, dass in einem Schritt i. die Mutter des Bolzensystems angezogen wird, wenn der Wert der erreichten Gesamtsteifigkeit Cᵢₛₜ in Relation zur aufgebrachten Montagevorspannkraft Fₘ größer oder gleich der zu erreichenden Gesamtsteifigkeit Cₛₒₗₗ in Relation zur aufgebrachten Montagevorspannkraft Fₘ ist. Bevorzugt wird, wenn die erreichte Gesamtsteifigkeit Cᵢₛₜ in Relation zur aufgebrachten Montagevorspannkraft Fₘ größer oder gleich der zu erreichenden Gesamtsteifigkeit Cₛₒₗₗ in Relation zur aufgebrachten Montagevorspannkraft Fₘ ist, das Bolzensystem voll angezogen. In einer Ausführungsform wird das Bolzensystem dann noch einmal teilweise oder vollständig entspannt bevor dieses voll, das heißt auf die Montagespannkraft Fₛₒₗₗ angezogen wird.

In einer Ausgestaltung ist vorgesehen, dass das Bolzensystem nach dem Schritt h. nochmals mit der Montagevorspannkraft Fₘ vorgespannt wird, wenn der Wert der erreichten Gesamtsteifigkeit Cᵢₛₜ in Relation zur aufgebrachten Montagevorspannkraft Fₘ kleiner dem Sollwert der zu erreichenden Gesamtsteifigkeit Cₛₒₗₗ in Relation zur aufgebrachten Montagevorspannkraft Fₘ ist. Konkret bedeutet dies: Wenn die ermittelte erreichte Gesamtsteifigkeit Cᵢₛₜ in Relation zur aufgebrachten Montagevorspannkraft Fₘ nicht den vorgegebenen Sollwert der zu erreichenden Gesamtsteifigkeit Cₛₒₗₗ in Relation zur aufgebrachten Montagevorspannkraft Fₘ erreicht, wird das Bolzensystem erneut vorgespannt oder auf die Montagespannkraft Fₛₒₗₗ verspannt. Diese Vorspannung mit der Montagevorspannkraft Fₘ hat zum Ziel, gegebenenfalls durch plastische Verformung der Flanschverbindung und/oder des Bolzensystems die erforderliche Gesamtsteifigkeit zu erreichen, die für eine sichere und stabile Verbindung notwendig ist.

Bevorzugt wird das Bolzensystem zuerst zumindest teilweise entspannt, bevor die Montagespannkraft Fₛₒₗₗ aufgebracht wird. Dies kann teilweise oder auch vollständig erfolgen. Während dieses Vorgangs wird kontinuierlich die erreichte Gesamtsteifigkeit Cᵢₛₜ gemessen. Wenn durch diese Maßnahme die erreichte Gesamtsteifigkeit Cᵢₛₜ schließlich die zu erreichende Gesamtsteifigkeit Cₛₒₗₗ erreicht oder übertrifft, in Relation zur Montagevorspannkraft Fₘ, wird die Flanschverbindung als sicher gegen Ermüdung eingestuft. Bevorzugt wird dieser Vorgang etwa ein bis etwa drei Mal durchgeführt, wenn die erforderliche Ermüdungssicherheit nicht sofort erreicht wird.

In einer Ausführungsform ist vorgesehen, dass wenn die erreichte Gesamtsteifigkeit Cᵢₛₜ nicht größer oder gleich der zu erreichenden Gesamtsteifigkeit Cₛₒₗₗ in Relation zur aufgebrachten Montagevorspannkraft Fₘ ist, das Bolzensystem dann noch einmal teilweise oder vollständig entspannt und dann auf die Montagespannkraft Fₛₒₗₗ angezogen wird, wobei die erreichte Gesamtsteifigkeit Cᵢₛₜ gemessen wird. Ist die dann erreichte Gesamtsteifigkeit Cᵢₛₜ in Relation zur aufgebrachten Montagevorspannkraft Fₘ größer oder gleich der zu erreichenden Gesamtsteifigkeit Cₛₒₗₗ in Relation zur aufgebrachten Montagevorspannkraft Fₘ, wird die Flanschverbindung bevorzugt als ausreichend Ermüdungssicher bewertet.

In einer Ausgestaltung ist vorgesehen, dass das Bolzensystem nach dem Schritt h. gelöst wird, wenn der Wert der erreichten Gesamtsteifigkeit Cᵢₛₜ in Relation zur aufgebrachten Montagevorspannkraft Fₘ kleiner dem Sollwert der numerisch und/oder analytisch bestimmten zu erreichenden Gesamtsteifigkeit Cₛₒₗₗ in Relation zur aufgebrachten Montagevorspannkraft Fₘ ist. In einer Ausgestaltung ist vorgesehen, dass nach dem Lösen des Bolzensystems zumindest ein Blech zwischen dem ersten Flansch und dem zweiten Flansch im Bereich des Bolzensystems eingelegt wird. Im Folgenden können dann nochmals zumindest die Schritte g. und h., bei denen das Bolzensystem kontrolliert verspannt wird, vorgenommen werden. Sollte die Maßnahme erfolgreich gewesen sein wird vorzugsweise die Mutter des Bolzensystems insbesondere definiert angezogen.

Wenn die erreichte Gesamtsteifigkeit Cᵢₛₜ nicht die zu erreichenden Gesamtsteifigkeit Cₛₒₗₗ, welche entweder numerisch und/oder analytisch bestimmt wurde, in Relation zur aufgebrachten Montagevorspannkraft Fₘ erreicht, kann dies zu unerwünschten Vibrationen, Lockerungen oder gar zum Ausfall der Verbindung führen. In solchen Fällen sieht eine Ausführungsform des Verfahrens vor, das Bolzensystem zu lösen. Dies dient in erster Linie dazu, eine Überarbeitung oder Anpassung der Verbindung zu ermöglichen. In diesem Zusammenhang kommt das sogenannte "Shimming" ins Spiel, welches im Stand der Technik ein bekanntes Verfahren zur Anpassung von Flanschverbindungen darstellt. Insbesondere werden spezielle Bleche oder Unterlegscheiben verwendet, die zwischen die Flansche eingelegt werden, um die Abstände zu korrigieren und somit einen festen und stabilen Sitz beziehungsweise Kraftschluss der Flansche aufeinander zu gewährleisten.

In einer weiteren Ausgestaltung kann vorgesehen sein, dass diese Bleche spezifisch für den Einsatz bei Flanschverbindungen gestaltet sind. Hierbei kann es sich um Bleche mit einer u-förmigen Ausnehmung handeln, welche um den Bolzen herum passen und somit für eine besonders präzise Passung sorgen und ein schnelles Einsetzen ermöglichen, ohne dass die Bolzenverbindung vollständig gelöst werden muss. Das Einlegen dieser Bleche oder "Shims" erfolgt dabei gezielt im Bereich des Bolzens, um bevorzugt den Kraftschluss zu optimieren.

In einer Ausgestaltung ist vorgesehen, dass die Schritte g. und h. wiederholt werden. Bevorzugt werden die Schritte g. und h. wiederholt, nachdem zumindest ein Blech zwischen die Flansche eingebracht wurde. Insbesondere wird wiederum eine Montagevorspannkraft Fₘ auf den Bolzen aufgebracht und eine erreichte Gesamtsteifigkeit Cᵢₛₜ des verspannten Flansches ermittelt und diese dann mit der zu erreichenden Gesamtsteifigkeit Cₛₒₗₗ verglichen. In einer Ausgestaltung wird eine Montagevorspannkraft Fₘ verwendet, die von der vorherigen abweicht, insbesondere größer oder kleiner ist.

In einer Ausgestaltung ist vorgesehen, dass alle Bolzensysteme der Flanschverbindung auf einen Bruchteil der vorgesehenen Montagespannkraft Fₛₒₗₗ angezogen werden, bevor die Verfahrensschritte h bis i an dem ersten Bolzensystem vorgenommen werden. Insbesondere werden diese mit einer Spannkraft von etwa 0,01*Fₛₒₗₗ bis etwa 0,95*Fₛₒₗₗ, bevorzugt etwa 0,01*Fₛₒₗₗ bis etwa 0,3*Fₛₒₗₗ angezogen.

In einer Ausgestaltung ist vorgesehen, dass die Verfahrensschritte g. bis h. jeweils an dem Bolzensystem vorgenommen werden, bei dem der Spalt zwischen dem ersten Flansch und dem zweiten Flansch am größten ist. Insbesondere wird hierdurch die Spann-Reihenfolge der Bolzen festgelegt. Ein exemplarisches Ausführungsbeispiel kann wie folgt dargestellt werden: Bei der Montage einer Windkraftanlage, insbesondere beim Verbinden großer Flansche, die beispielsweise die Turmsegmente miteinander verbinden, treten oftmals unterschiedliche Spaltmaße zwischen den zu verbindenden Flanschen auf. Beispielhaft ist vorgesehen, dass zuerst der Bolzen, der sich an der Stelle mit dem größten Spaltmaß zwischen dem ersten und dem zweiten Flansch befindet, identifiziert wird. Dieser spezifische Bolzen wird als Referenzpunkt für die folgenden Montageschritte verwendet. Die Verfahrensschritte g. bis h. werden speziell an diesem Bolzensystem vorgenommen, um die optimale Spannung und Ausrichtung der Flansche sicherzustellen. Die Wahl dieses speziellen Bolzensystems als Ausgangspunkt stellt sicher, dass die auf die Flansche aufgebrachte Spannung und das Drehmoment in einer Sequenz aufgebracht werden, die ein gleichmäßiges und sicheres Anziehen aller Bolzen ermöglicht. Indem man von dem Punkt mit dem größten Spaltmaß ausgeht und systematisch in einer festgelegten Reihenfolge weiterarbeitet, kann eine gleichmäßige Lastverteilung und ein sicherer Sitz der gesamten Flanschverbindung gewährleistet werden. In der Praxis könnte dies bedeuten, dass bei der Montage der Flansche einer Windkraftanlage der Monteur oder ein Roboter zuerst den Bereich identifiziert, in dem das größte Spaltmaß vorhanden ist. Dort wird der erste Bolzen festgezogen, wobei die Verfahrensschritte g. bis h. ausgeführt werden. Anschließend werden die übrigen Bolzen in einer festgelegten Reihenfolge festgezogen oder es wird wiederum das Bolzensystem identifiziert, bei dem nun das größte Spaltmaß vorhanden ist, wodurch ein Richten der Flansche beziehungsweise optimales Schließen der Spalten gewährleistet wird.

In einer beispielhaften Ausführungsform ist vorgesehen, dass eine Flanschverbindung montiert und die vorbereitenden Schritte durchgeführt werden, indem die relevanten Parameter und Steifigkeiten berechnet werden. Nach der Montage der Bolzenspannvorrichtung wird eine Vorspannkraft auf den Bolzen angewendet und die Gesamtsteifigkeit gemessen. Es wird festgestellt, dass diese kleiner als der vorausberechnete Wert ist. Anstatt die Mutter festzuziehen, wird das Bolzensystem gelöst. Ein Blech wird zwischen die Flansche gelegt und die Vorspann- und Messschritte werden wiederholt. Dieses Mal wird die gewünschte Steifigkeit erreicht und die Mutter des Bolzensystems wird mit der vorgesehenen Montagespannkraft festgezogen.

In einer weiteren beispielhaften Ausgestaltung wird die Bolzenspannvorrichtung montiert. Anschließend wird die Vorspannkraft mithilfe einer Bolzenspannvorrichtung auf den Bolzen angewendet und die Gesamtsteifigkeit in Relation zur Vorspannkraft der Flanschverbindung mithilfe von Sensoren erfasst. Diese liegt beispielhaft unterhalb des Sollwertes. Daher wird das Verfahren zur erneuten Vorspannung des Bolzensystems gestartet, in der Hoffnung, den Sollwert zu erreichen. Der Vorgang wird wiederholt und die Gesamtsteifigkeit erneut überprüft. Beispielhaft bleibt trotz der des erneuten Spannens des Bolzensystems die Gesamtsteifigkeit unter dem Sollwert. Als Reaktion darauf wird das Bolzensystem gelöst. Ein Blech wird zwischen den beiden Flanschen im Bereich des Bolzensystems positioniert. Nachdem das Blech eingelegt wurde, werden die Schritte des Aufbringens der Vorspannkraft und des Vergleichens der Steifigkeiten wiederholt. Mit diesem zusätzlichen Blech wird schließlich die gewünschte Steifigkeit erreicht und die Montage wird fortgesetzt, indem die Mutter des Bolzensystems mit der spezifizierten Montagespannkraft festgezogen wird. Gegebenenfalls, falls immer noch nicht der Sollwert erreicht wird, werden die oben genannten Schritte mit einem dickeren Blech oder eine Mehrzahl von Blechen wiederholt.

Weiterhin wird eine Verwendung einer Bolzenspannvorrichtung umfassend ein Gehäuse, eine Zugeinheit, ein Wegmessgerät, eine Zugkraftermittlung und eine Recheneinheit vorgeschlagen, wobei mittels des Wegmessgeräts eine erreichte Gesamtsteifigkeit Cᵢₛₜ messbar ist, wobei mittels der Recheneinheit eine numerisch und/oder analytisch ermittelte zu erreichende Gesamtsteifigkeit Cₛₒₗₗ speicherbar ist, zur Durchführung eines oben genannten Verfahrens.

Die Bolzenspannvorrichtung verfügt über ein Gehäuse, in welchem sowohl eine Zugeinheit für das Anbringen der notwendigen Vorspannkraft an den Bolzen als auch ein präzises Wegmessgerät untergebracht sind. Mittels des Wegmessgeräts kann die erreichte Gesamtsteifigkeit Cᵢₛₜ des Flansches während des Verspannungsprozesses ermittelt werden. Eine integrierte Recheneinheit, die Teil dieser Bolzenspannvorrichtung ist, erlaubt es bevorzugt, eine analytisch bestimmte, zu erreichende Gesamtsteifigkeit Cₛₒₗₗ zu speichern. Dieser Wert dient bevorzugt als Referenz, gegen die die tatsächlich erreichte Steifigkeit während des Montageprozesses verglichen wird. Die Recheneinheit kann in dem Gehäuse verbaut sein oder von diesem beabstandet kabelgebunden oder per Funkverbindung mit den restlichen Bauteilen, insbesondere dem Wegmessgerät verbunden sein. Bevorzugt ist vorgesehen, dass die Recheneinheit in der Lage ist, eine Schar von Referenzwerten zu speichern. Dies bietet den Vorteil, dass je nach Flanschart, Material oder Anwendungsfall unterschiedliche Zielwerte für die Gesamtsteifigkeit hinterlegt werden können. Ein weiterer Aspekt, der durch die Recheneinheit realisiert sein kann, ist die Möglichkeit, aus den gemessenen Werten eine erreichte Gesamtsteifigkeit Cᵢₛₜ und/oder eine Flanschkompression Δf zu berechnen.

Weiterhin wird ein Computerprogrammprodukt vorgeschlagen umfassend Befehle, die bewirken, dass eine Bolzenspannvorrichtung das erfindungsgemäße Verfahren ausführt, mit einem Datensatz, umfassend zumindest eine Referenzwerteschar, die ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit C_{Bolzen} für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße Sₙ, so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit Cₛₒₗₗ des verspannten Flanschkörpers unter Berücksichtigung der zuvor bestimmten maximal zulässigen Spaltmaße Sₙ und der Montagevorspannkraft Fₘ, welche für eine Ermüdungssicherheit der Verbindung während des Vorspannens erreicht werden muss,
wobei die Referenzwerteschar jeweils einen Sollwert einer Relation einer numerisch und/oder analytisch ermittelten zu erreichenden Gesamtsteifigkeit Cₛₒₗₗ zu einer Montagevorspannkraft Fₘ wieder gibt, wobei eine erreichte Gesamtsteifigkeit Cᵢₛₜ in Relation zu einer aufgebrachten Montagevorspannkraft Fₘ an einem Bolzensystem mit dem Sollwert vergleichbar ist, so dass mittels des Computerprogrammproduktseine qualitative Aussage über die Flanschverbindung an einer Stelle eines Bolzensystems ausgebbar ist. Bevorzugt führt das Computerprogrammprodukt das oben genannte Verfahren aus. Vorteilhaft ist das vorgeschlagene Computerprogrammprodukt in der Lage, die Integrität und Eignung von Flanschverbindungen anhand von Referenzwerten zu bewerten. Weiterhin vorteilhaft können die Ergebnisse der Bewertung bei der Montage von Flanschverbindungen verwendet werden.

Das Computerprogrammprodukt beinhaltet zumindest einen Datensatz, der zumindest eine Referenzwerteschar umfasst. Diese Schar repräsentiert jeweils einen Sollwert, der die Relation einer numerisch und/oder analytisch ermittelten zu erreichenden Gesamtsteifigkeit Cₛₒₗₗ zu einer Montagevorspannkraft Fₘ darstellt. In der praktischen Anwendung ermöglicht dieses Computerprogrammprodukt den direkten Vergleich einer gemessenen, erreichten Gesamtsteifigkeit Cᵢₛₜ eines gegebenen Bolzensystems in Relation zur tatsächlich aufgebrachten Montagevorspannkraft Fₘ mit dem entsprechenden Sollwert. Basierend auf diesem Vergleich kann das Programm eine qualitative Aussage bezüglich der Integrität und Qualität der Flanschverbindung an einer bestimmten Stelle des Bolzensystems generieren.

Erfindungsgemäß ist vorgesehen, dass je nach qualitativer Aussage mittels des Computerprogrammproduktes veranlasst wird, dass eine Mutter des Bolzensystems angezogen wird oder dass das Bolzensystem gelöst wird. Bevorzugt bietet das Computerprogrammprodukt die Möglichkeit, basierend auf der getroffenen qualitativen Aussage, automatisierte Aktionen in Gang zu setzen. Das bedeutet, sollte das Computerprogrammprodukt eine Diskrepanz oder ein potentielles Problem identifizieren, kann es veranlassen, dass zum Beispiel eine Mutter des Bolzensystems angezogen oder gelöst wird. In Fällen, in denen die Flanschverbindung als ungeeignet oder potentiell unsicher bewertet wird, kann das Programm auch die Anweisung geben, dass das gesamte Bolzensystem gelöst wird, um beispielsweise zumindest ein Blech zwischen die Flansche einzubringen.

Weiterhin vorteilhaft werden die Ergebnisse der Bewertung durch das Computerprogrammprodukt an einen Roboter weitergegeben, der abhängig von den Ergebnissen den Flansch montiert. Beispielsweise löst der Roboter das aktuell gespannte Bolzensystem wieder, um Bleche einzulegen, wenn die Ermüdungssicherheit nicht gewährleistet ist. Beispielsweise zieht der Roboter das Bolzensystem auf eine Montagespannkraft Fₛₒₗₗ an, wenn die Ermüdungssicherheit gewährleistet ist.

In einer Ausgestaltung ist eine Ausgabeeinheit vorgesehen, die einem Monteur anweist, was mit dem aktuellen Bolzensystem zu tun ist: beispielsweise Bolzensystem lösen oder anziehen.

Weiterhin wird eine Verwendung eines oben genannten Computerprogrammprodukts in einem oben genannten Verfahren vorgeschlagen.

Weiterhin wird ein Speichermedium, auf dem das erfindungsgemäße Computerprogramm gespeichert ist, umfassend einen Datensatz, umfassend zumindest eine Referenzwerteschar vorgeschlagen, die jeweils einen Sollwert einer Relation einer numerisch und/oder analytisch zu erreichenden Gesamtsteifigkeit Cₛₒₗₗ zu einer Montagevorspannkraft Fₘ wieder gibt, wobei die Referenzwerteschar ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermit-teln einer axialen Steifigkeit (CBolzen) für den Bolzen und Ermitteln einer axia-len Steifigkeit des Flanschkörpers der vorgespannten Flanschverbindung,
c. Analytische und/oder numerische Untersuchung zur Festlegung der maximal zulässigen Spaltmaße (Sn), so dass eine Ermüdungsschädigung des Bolzensys-tems unter Berücksichtigung spezifischer Randbedingung eine definierte Ge-samtschädigung nicht überschreitet,
d. Analytische Ermittlung einer zu erreichenden Gesamtsteifigkeit (Csoll) des verspannten Flanschkörpers unter Berücksichtigung der zuvor bestimmten ma-ximal zulässigen Spaltmaße (Sn) und der Montagevorspannkraft (Fm), welche für eine Ermüdungssicherheit der Verbindung während des Vorspannens er-reicht werden muss.

Das Speichermedium, das einen Datensatz mit mindestens einer Referenzwerteschar umfasst, zeigt vorteilhaft eine technische Wirkung in Bezug auf die Optimierung und Effizienz von Flanschverbindungen. Das Speichermedium bietet die Möglichkeit, kritische Daten, die die Relation einer numerisch und/oder analytisch bestimmten Sollwert einer zu erreichenden Gesamtsteifigkeit Cₛₒₗₗ zu einer Montagevorspannkraft Fₘ repräsentieren, effizient zu speichern und abzurufen. Diese Daten sind das Resultat technischer Berechnungen, und ihre schnelle Verfügbarkeit ist von Bedeutung, um mechanische Systeme, wie die Bolzenspannvorrichtung oder einen Roboter mit diesem sicher und effizient zu konstruieren und zu betreiben.

Die technische Wirkung des Speichermediums und der darauf befindliche Datensatz liegt insbesondere in seiner Fähigkeit, die Prozesse der automatisierten Entscheidungsfindung, Anpassung und Implementierung von Flanschverbindungen zu beschleunigen. Durch das Vorhalten dieser spezifischen Datenrelationen können Ingenieure und Fachleute rasch die optimalen Werte für die Montagevorspannkraft in Bezug auf die gewünschte Gesamtsteifigkeit ermitteln und anwenden. Dies reduziert die Notwendigkeit wiederholter manueller Berechnungen, minimiert Fehler und steigert die Zuverlässigkeit des Gesamtsystems.

Zudem, in Kombination mit dem zugehörigen Computerprogrammprodukt, ermöglicht das Speichermedium die Automatisierung bestimmter Vorgänge, die sonst manuell und zeitaufwändig durchgeführt werden müssten. Dies führt zu einer weiteren technischen Wirkung in Form von gesteigerter Effizienz und Genauigkeit bei der Implementierung von Flanschverbindungen.

Der vorliegende Datensatz, der eine Referenzwerteschar umfasst, die jeweils eine Relation einer numerisch und/oder analytisch bestimmten Sollwert einer zu erreichenden Gesamtsteifigkeit Cₛₒₗₗ zu einer Montagevorspannkraft Fₘ repräsentiert, weist einen deutlichen technischen Charakter auf. In diesem Kontext wird der Datensatz nicht bloß als eine Sammlung von Informationen oder reinen Daten betrachtet, sondern vielmehr als ein essenzielles Werkzeug, das zur Lösung eines spezifischen technischen Problems beiträgt.

Die Erstellung dieses Datensatzes basiert auf umfangreichen technischen Überlegungen und Berechnungen. Er dient dazu, die Interaktion und das Zusammenspiel zwischen verschiedenen technischen Elementen, hier insbesondere der Gesamtsteifigkeit eines Systems und der dazu benötigten Montagevorspannkraft, besser zu verstehen und zu steuern. Durch die Kenntnis der in dem Datensatz enthaltenen Relationenkann eine präzise, optimierte und wiederholbare Anwendung von Montagevorspannkräften durchgeführt werden, um eine gewünschte Gesamtsteifigkeit zu erreichen. Dies hat direkte Auswirkungen auf die mechanischen Eigenschaften des Systems und kann zu einer verbesserten Performance, Sicherheit und Lebensdauer des Gesamtsystems führen.

Des Weiteren bietet der Datensatz, wenn er in einem geeigneten Speichermedium gespeichert und von einem entsprechenden Computerprogrammprodukt interpretiert wird, die Möglichkeit zur Automatisierung von Prozessen, die zur Montage, Justierung und Optimierung von Flanschverbindungen benötigt werden. Dies ermöglicht nicht nur eine schnellere und genauere Implementierung, sondern vermindert auch menschliche Fehler und reduziert den Bedarf an manuellen Interventionen, was wiederum zu einer Erhöhung der Gesamtproduktivität und Effizienz führt.

Zusammenfassend dienen das Speichermedium und der Datensatz nicht nur als passiver Datenspeicher, sondern diese unterstützen auchdie technische Optimierung und Effizienzsteigerung von Flanschverbindungssystemen. Hierdurch wird eine klare und substantielle technische Wirkung erzielt.

Das vorgestellte Verfahren zur Montage von Flanschverbindungen gewährleistet vorteilhaft durch eine umfassende analytische und/oder numerische Untersuchung der relevanten Flansch- und Bolzenparameter eine präzise, optimierte und wiederholbare Montage von Flanschverbindungen. Durch das analytische und/oder nummerische Ermitteln einer zulässigen Gesamtsteifigkeit sowie weiterer kritischer Parameter kann die Integrität und Lebensdauer der Flanschverbindung deutlich verbessert werden. Die systematische Bestimmung der maximal zulässigen Spaltmaße bei der Montage unter Berücksichtigung spezifischer Randbedingungen garantiert vorteilhaft zudem eine hohe Ermüdungssicherheit des Bolzensystems und der Flanschverbindung. Bei der Implementierung dieses Verfahrens profitiert die Verwendung des Computerprogrammproduktes von einer Automatisierung und Standardisierung des Prozesses, wodurch menschliche Fehler minimiert und die Gesamteffizienz gesteigert wird. Das Speichermedium, welches die Referenzwerteschar-Daten enthält, dient vorteilhaft als Werkzeug, das eine konsistente und präzise Anwendung des Verfahrens ermöglicht, wodurch sich letztlich die Qualität und Zuverlässigkeit der verspannten Flanschverbindungen erhöht.

## Patentansprüche

1. Verfahren zur Montage von Flanschverbindungen, wobei die Flanschverbindung zumindest einen ersten Flansch, einen zweiten Flansch und eine Anzahl von Bolzensystemen aufweist, wobei der erste und der zweite Flansch jeweils eine Mehrzahl von Flanschausnehmungen aufweist, wobei die Flanschausnehmungen des ersten Flansches zu den Flanschausnehmungen des zweiten Flansches ausrichtbar sind, wobei die Bolzensysteme jeweils zumindest einen Bolzen, eine Mutter und ein Widerlager aufweisen, umfassend die Schritte:
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit (C_{Bolzen}) für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße (Sₙ), so dass eine Ermüdungsschädigung des Bolzensystems unter Berücksichtigung spezifischer Randbedingung eine definierte Gesamtschädigung nicht überschreitet ,
d. Analytische Ermittlung einer zu erreichenden Gesamtsteifigkeit (Cₛₒₗₗ) des verspannten Flanschkörpers unter Berücksichtigung der zuvor bestimmten maximal zulässigen Spaltmaße (Sₙ) und der Montagevorspannkraft (Fₘ), welche für eine Ermüdungssicherheit der Verbindung während des Vorspannens erreicht werden muss,
e. Einbringung der Bolzensysteme in die zueinander ausgerichteten Flanschausnehmungen des ersten Flansches und des zweiten Flansches,
f. Montieren der Bolzenspannvorrichtung an einen Bolzen,
g. Aufbringen einer Montagevorspannkraft (Fₘ) auf den Bolzen und Ermitteln einer erreichten Gesamtsteifigkeit (Cᵢₛₜ) der verspannten Flansche,
h. Vergleich der erreichten Gesamtsteifigkeit (Cᵢₛₜ) mit der zu erreichenden Gesamtsteifigkeit (Cₛₒₗₗ)
i. Anziehen der Mutter des Bolzensystems mit einer Montagespannkraft (Fₛₒₗₗ),
wenn der Wert der erreichten Gesamtsteifigkeit (Cᵢₛₜ) in Relation zur aufgebrachten Montagevorspannkraft (Fₘ) größer oder gleich der zu erreichenden Gesamtsteifigkeit (Cₛₒₗₗ) in Relation zur aufgebrachten Montagevorspannkraft (Fₘ) ist.

2. Verfahren nach Anspruch 1, **dadurch gekennzeichnet, dass** das Bolzensystem nach dem Schritt h. nochmals mit der Montagevorspannkraft (Fₘ) vorgespannt wird, wenn der Wert der erreichten Gesamtsteifigkeit (Cᵢₛₜ) in Relation zur aufgebrachten Montagevorspannkraft (Fₘ) kleiner dem Sollwert der zu erreichenden Gesamtsteifigkeit (Cₛₒₗₗ) in Relation zur aufgebrachten Montagevorspannkraft (Fₘ) ist.

3. Verfahren nach Anspruch 1, **dadurch gekennzeichnet, dass** das Bolzensystem nach dem Schritt h. gelöst wird, wenn der Wert der erreichten Gesamtsteifigkeit (Cᵢₛₜ) in Relation zur aufgebrachten Montagevorspannkraft (Fₘ) kleiner dem Sollwert der zu erreichenden Gesamtsteifigkeit (Cₛₒₗₗ) in Relation zur aufgebrachten Montagevorspannkraft (Fₘ) ist.

4. Verfahren nach Anspruch 3, **dadurch gekennzeichnet, dass** nach dem Lösen des Bolzensystems zumindest ein Blech zwischen dem ersten Flansch und dem zweiten Flansch im Bereich des Bolzensystems eingelegt wird.

5. Verfahren nach Anspruch 4, **dadurch gekennzeichnet, dass** zumindest die Schritte g und h wiederholt werden.

6. Verfahren nach einem oder mehreren der vorhergehenden Ansprüche, **dadurch gekennzeichnet, dass** zumindest die Verfahrensschritte g bis h jeweils zuerst an dem Bolzensystem vorgenommen werden, bei dem der Spalt zwischen dem ersten Flansch und dem zweiten Flansch am größten ist.

7. Verfahren nach einem oder mehreren der vorhergehenden Ansprüche, **dadurch gekennzeichnet, dass** die spezifischen Randbedingungen zumindest teilweise einer Markow-Matrix P für Belastungszustände und Teilschädigungen der Flanschverbindung entnommen sind, aus der sich ein Gesamtschädigungswert D_{MAR} je Bolzensystem ergibt, der kleiner 1 ist.

8. Verwendung einer Bolzenspannvorrichtung umfassend ein Gehäuse, eine Zugeinheit, ein Wegmessgerät, eine Zugkraftermittlung und eine Recheneinheit, wobei mittels der Bolzenspannvorrichtung eine erreichte Gesamtsteifigkeit (Cᵢₛₜ) messbar ist, wobei mittels der Recheneinheit eine numerisch und/oder analytisch ermittelte zu erreichende Gesamtsteifigkeit (Cₛₒₗₗ) speicherbar ist, zur Durchführung eines Verfahrens gemäß einem oder mehreren der vorhergehenden Ansprüche.

9. Computerprogrammprodukt, umfassend Befehle, die bewirken, dass eine Bolzenspannvorrichtung das Verfahren nach einem oder mehreren der Ansprüche 1 bis 7 ausführt, mit einem Datensatz, umfassend zumindest eine Referenzwerteschar, die ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit (C_{Bolzen}) für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße (Sₙ), so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit (Cₛₒₗₗ) des verspannten Flanschkörpers unter Berücksichtigung der zuvor bestimmten maximal zulässigen Spaltmaße (Sₙ) und der Montagevorspannkraft (Fₘ), welche für eine Ermüdungssicherheit der Verbindung während des Vorspannens erreicht werden muss,
wobei die Referenzwerteschar jeweils einen Sollwert einer Relation einer numerisch und/oder analytisch ermittelten zu erreichenden Gesamtsteifigkeit (Cₛₒₗₗ) zu einer Montagevorspannkraft (Fₘ) wieder gibt, wobei eine erreichte Gesamtsteifigkeit (Cᵢₛₜ) in Relation zu einer aufgebrachten Montagevorspannkraft (Fₘ) an einem Bolzensystem mit dem Sollwert vergleichbar ist, so dass mittels des Computerprogrammprodukts eine qualitative Aussage über die Flanschverbindung an einer Stelle eines Bolzensystems ausgebbar ist, wobei je nach qualitativer Aussage mittels des Computerprogrammproduktes veranlasst wird, dass eine Mutter des Bolzensystems angezogen wird oder dass das Bolzensystem gelöst wird.

10. Verwendung eines Computerprogrammprodukts gemäß Anspruch 9 in einem Verfahren gemäß einem oder mehreren der Ansprüche 1 bis 7.

11. Speichermedium, auf dem das Computerprogramm nach Anspruch 9 gespeichert ist, umfassend einen Datensatz, umfassend zumindest eine Referenzwerteschar, die jeweils einen Sollwert einer Relation einer numerisch und/oder analytisch zu erreichenden Gesamtsteifigkeit (Cₛₒₗₗ) zu einer Montagevorspannkraft (Fₘ) wieder gibt, wobei die Referenzwerteschar ermittelt ist aus den Schritten
a. Ermittlung von Flanschparametern zumindest des ersten Flansches und des zweiten Flansches der Flanschverbindung,
b. Analytisches Ermitteln eines bolzensystemtypischen Dehnverhaltens, Ermitteln einer axialen Steifigkeit (C_{Bolzen}) für den Bolzen und Ermitteln einer axialen Steifigkeit des Flanschkörpers der vorgespannten Flanschverbindung,
c. Analytische und/oder numerische Untersuchung zur Festlegung der maximal zulässigen Spaltmaße (Sₙ), so dass eine Ermüdungsschädigung des Bolzensystems unter Berücksichtigung spezifischer Randbedingung eine definierte Gesamtschädigung nicht überschreitet,
d. Analytische Ermittlung einer zu erreichenden Gesamtsteifigkeit (Cₛₒₗₗ) des verspannten Flanschkörpers unter Berücksichtigung der zuvor bestimmten maximal zulässigen Spaltmaße (Sₙ) und der Montagevorspannkraft (Fₘ), welche für eine Ermüdungssicherheit der Verbindung während des Vorspannens erreicht werden muss

## Claims

1. A method for installing flange connections, wherein the flange connection has at least one first flange, a second flange and a number of bolt systems, wherein the first and the second flange each has a plurality of flange recesses, wherein the flange recesses of the first flange can be aligned to the flange recesses of the second flange, wherein the bolt systems each have at least one bolt, a nut and an abutment, comprising the steps of:
a. determining flange parameters at least of the first flange and of the second flange of the flange connection,
b.analytically determining a bolt system-typical elongation behavior, determining an axial stiffness (C_{bolt}) for the bolt and determining an axial stiffness of the flange body of the pretensioned flange connection,
c.analytical and/or numerical analysis for specifying the maximally permissible gap dimensions (Sₙ), so that a fatigue damage to the bolt system in consideration of a specific boundary condition does not exceed a defined total damage_{,}
d.analytically determining an overall stiffness (C_{target}), which is to be reached, of the tensioned flange body in consideration of the previously determined maximally permissible gap dimensions (Sₙ) and of the installation pretensioning force (Fₘ), which must be reached for a fatigue safety of the connection during the pretensioning,
e.introducing the bolt systems into the flange recesses, which are aligned to one another, of the first flange and of the second flange,
f. installing the bolt tensioning device on a bolt,
g.applying an installation pretensioning force (Fₘ) to the bolt and determining a reached overall stiffness (C_{act}) of the tensioned flanges,
h. comparing the reached overall stiffness (C_{act}) to the overall stiffness (C_{target})_{,} which is to be reached,
i. tightening the nut of the bolt system with an installation tensioning force (F_{target}) when the value of the reached overall stiffness (C_{act}) in relation to the applied installation pretensioning force (Fₘ) is larger than or equal to the overall stiffness (C_{target}), which is to be reached, in relation to the applied installation pretensioning force (Fₘ).

2. The method according to claim 1, **characterized in that** the bolt system is pretensioned once again with the installation pretensioning force (Fₘ) after step h. when the value of the reached overall stiffness (C_{act}) in relation to the applied installation pretensioning force (Fₘ) is smaller than the target value of the overall stiffness (C_{target}), which is to be reached, in relation to the applied installation pretensioning force (Fₘ).

3. The method according to claim 1, **characterized in that** the bolt system is released after step h. when the value of the reached overall stiffness (C_{act}) in relation to the applied installation pretensioning force (Fₘ) is smaller than the target value of the overall stiffness (C_{target}), which is to be reached, in relation to the applied installation pretensioning force (Fₘ).

4. The method according to claim 3, **characterized in that** at least one sheet is inserted between the first flange and the second flange in the region of the bolt system after releasing the bolt system.

5. The method according to claim 4, **characterized in that** at least the steps g and h are repeated.

6. The method according to one or several of the preceding claims, **characterized in that** at least the method steps g to h are in each case performed first on the bolt system, in the case of which the gap between the first flange and the second flange is largest.

7. The method according to one or several of the preceding claims, **characterized in that** the specific boundary conditions are at least partly taken from a Markow matrix P for load states and partial damages to the flange connection, from which a total damage value D_{MAR} for each bolt system results, which is smaller than 1.

8. Use of a bolt tensioning device comprising a housing, a tensioning unit, a distance measuring device, a tensile force determination and a computing unit, wherein a reached overall stiffness (C_{act}) can be measured by means of the bolt tensioning device, wherein a numerically and/or analytically determined overall stiffness (C_{target}), which is to be reached, can be stored by means of the computing unit, for carrying out a method according to one or several of the preceding claims.

9. A computer program product, comprising commands, which have the effect that a bolt tensioning device carries out the method according to one or several of claims 1 to 7, with a data set, comprising at least one reference value series, which is determined from the steps of
a. determining flange parameters at least of the first flange and of the second flange of the flange connection,
b. analytically determining a bolt system-typical elongation behavior, determining an axial stiffness (C_{bolt}) for the bolt and determining an axial stiffness of the flange body of the pretensioned flange connection,
c. analytical and/or numerical analysis for specifying the maximally permissible gap dimensions (Sₙ), so that a fatigue damage to the bolt system in consideration of a specific boundary condition does not exceed a defined total damage,
d. analytically determining an overall stiffness (C_{target}), which is to be reached, of the tensioned flange body in consideration of the previously determined maximally permissible gap dimensions (Sₙ) and of the installation pretensioning force (Fₘ), which must be reached for a fatigue safety of the connection during the pretensioning,
wherein the reference value series in each case reflects a target value of a relation of a numerically and/or analytically determined overall stiffness (C_{target}), which is to be reached, to an installation pretensioning force (Fₘ), wherein a reached overall stiffness (C_{act}) in relation to an applied installation pretensioning force (Fₘ) on a bolt system can be compared to the target value, so that a qualitative statement about the flange connection can be output at a position of a bolt system by means of the computer program product, wherein the computer program product prompts a nut of the bolt system to be tightened or the bolt system to be released, depending on the qualitative statement.

10. Use of a computer program product according to claim 9 in a method according to one or several of claims 1 to 7.

11. A storage medium on which the computer program according to claim 9 is stored, comprising a data set comprising at least one reference value series, which each reflects a target value of a relation of an overall stiffness (C_{target}), which is to be reached numerically and/or analytically, to an installation pretensioning force (Fₘ), wherein the reference value series is determined from the steps of
a. determining flange parameters at least of the first flange and of the second flange of the flange connection,
b. analytically determining a bolt system-typical elongation behavior, determining an axial stiffness (C_{bolt}) for the bolt and determining an axial stiffness of the flange body of the pretensioned flange connection,
c. analytical and/or numerical analysis for specifying the maximally permissible gap dimensions (Sₙ), so that a fatigue damage to the bolt system in consideration of a specific boundary condition does not exceed a defined total damage,
d. analytically determining an overall stiffness (C_{target}), which is to be reached, of the tensioned flange body in consideration of the previously determined maximally permissible gap dimensions (Sₙ) and of the installation pretensioning force (Fₘ), which must be reached for a fatigue safety of the connection during the pretensioning

## Revendications

1. Procédé d'assemblage de connexions à brides, la connexion à brides comportant au moins une première bride, une deuxième bride et un nombre de systèmes de broches, les première et deuxième brides comportant chacune une pluralité d'évidements de bride, les évidements de bride de la première bride pouvant être alignés avec les évidements de bride de la deuxième bride, les systèmes de broches comportant chacun au moins une broche, un écrou et une butée, comprenant les étapes consistant à :
a. déterminer des paramètres de bride d'au moins la première bride et la deuxième bride de la connexion à brides,
b. déterminer analytiquement un comportement à l'allongement caractéristique du système de broches, déterminer une rigidité axiale (C_{broche}) pour la broche et déterminer une rigidité axiale du corps de bride de la connexion à brides précontrainte,
c. effectuer une étude analytique et/ou numérique visant à déterminer les dimensions maximales admissibles des interstices (Sₙ), de sorte qu'une défaillance par fatigue du système de broches, compte tenu de conditions aux limites spécifiques, ne dépasse pas un niveau de défaillance global défini.
d. déterminer analytiquement une rigidité totale à atteindre (C_{cible}) du corps de bride précontraint, en tenant compte des dimensions maximales admissibles des interstices (Sₙ) précédemment déterminées et de la force de précontrainte de montage (Fₘ), qui doit être atteinte pour garantir la résistance à la fatigue de l'assemblage pendant la précontrainte,
e. insérer les systèmes de broches dans les évidements de bride alignés l'un par rapport à l'autre de la première bride et de la deuxième bride,
f. monter le dispositif de serrage de broches sur une broche,
g. appliquer une force de précontrainte de montage (Fm) sur la broche et déterminer la rigidité totale atteinte (Cₘ) des brides précontraintes,
h. comparer la rigidité totale atteinte (C_{réelle}) avec la rigidité totale à atteindre (C_{cible})
i. serrer l'écrou du système de broches avec une force de serrage de montage (F_{cible}) lorsque la valeur de la rigidité totale atteinte (C_{réelle}), rapportée à la force de précontrainte de montage appliquée (Fₘ), est supérieure ou égale à la rigidité totale à atteindre (C_{cible}), rapportée à la force de précontrainte de montage appliquée (Fₘ).

2. Procédé selon la revendication 1, **caractérisé en ce que** le système de broches est à nouveau précontraint après l'étape h. avec la force de précontrainte de montage (Fₘ) lorsque la valeur de la rigidité totale atteinte (C_{cible}) par rapport à la force de précontrainte de montage appliquée (Fₘ) est inférieure à la valeur de cible de la rigidité totale à atteindre (C_{cible}) par rapport à la force de précontrainte de montage appliquée (Fₘ).

3. Procédé selon la revendication 1, **caractérisé en ce que** le système de broches est desserré après l'étape h. lorsque la valeur de la rigidité totale atteinte (C_{réelle}) par rapport à la force de précontrainte de montage appliquée (Fₘ) est inférieure à la valeur cible de la rigidité totale à atteindre (C_{cible}) par rapport à la force de précontrainte de montage appliquée (Fₘ).

4. Procédé selon la revendication 3, **caractérisé en ce qu'**après le desserrage du système de broches, au moins une tôle est intercalée entre la première bride et la deuxième bride dans la zone du système de broches.

5. Procédé selon la revendication 4, **caractérisé en ce qu'**au moins les étapes g et h sont répétées.

6. Procédé selon une ou plusieurs des revendications précédentes, **caractérisé en ce qu'**au moins les étapes g à h du procédé sont chacune d'abord effectuées sur le système de broches pour lequel l'écart entre la première bride et la deuxième bride est le plus grand.

7. Procédé selon une ou plusieurs des revendications précédentes, **caractérisé en ce que** les conditions aux limites spécifiques sont tirées, au moins en partie, d'une matrice de Markov P pour les états de charge et les dommages partiels de l'assemblage à brides, à partir de laquelle on obtient une valeur de dommage globale D_{MAR} par système de broches, qui est inférieure à 1.

8. Utilisation d'un dispositif de serrage de broches comprenant un boîtier, une unité de traction, un capteur de course, un système de détermination de la force de traction et une unité de calcul, dans lequel une rigidité totale atteinte (C_{réelle}) peut être mesurée à l'aide du dispositif de serrage de broches, et dans lequel une rigidité totale à atteindre (C_{cible}), déterminée numériquement et/ou analytiquement, peut être mémorisée, pour la mise en œuvre d'un procédé selon une ou plusieurs des revendications précédentes.

9. Produit logiciel comprenant des instructions qui amènent un dispositif de serrage de broches à exécuter le procédé selon une ou plusieurs des revendications 1 à 7, avec un ensemble de données comprenant au moins un ensemble de valeurs de référence déterminées à partir des étapes consistant à :
a. déterminer des paramètres de bride d'au moins la première bride et la deuxième bride de l'assemblage à brides,
b. déterminer analytiquement un comportement à l'allongement caractéristique du système de broches, déterminer une rigidité axiale (C_{broche}) pour la broche et déterminer une rigidité axiale du corps de bride de la connexion à brides précontrainte,
c. effectuer une étude analytique et/ou numérique visant à déterminer les dimensions maximales admissibles des interstices (Sₙ), de sorte qu'une dégradation par fatigue du système de broches, compte tenu de conditions aux limites spécifiques, ne dépasse pas un niveau de dégradation global défini,
d. déterminer analytiquement une rigidité totale à atteindre (C_{cible}) du corps de bride précontraint, en tenant compte des dimensions maximales admissibles des interstices (Sₙ) précédemment déterminées et de la force de précontrainte de montage (Fₘ), qui doit être atteinte pour garantir la résistance à la fatigue de l'assemblage pendant la précontrainte,
dans lequel l'ensemble de valeurs de référence reflète dans chaque cas une valeur cible d'une relation entre une rigidité totale à atteindre (C_{cible}), déterminée numériquement et/ou analytiquement, et une force de précontrainte de montage (Fₘ), une rigidité totale atteinte (C_{réelle}) par rapport à une force de précontrainte de montage appliquée (Fₘ) appliquée à un système de broches étant comparable à la valeur cible, de sorte qu'une évaluation qualitative de la connexion à brides en un point d'un système de broches peut être fournie à l'aide du produit logiciel, et où, en fonction de cette évaluation qualitative, le produit logiciel déclenche soit le serrage d'un écrou du système de broches, soit le desserrage de ce système.

10. Utilisation d'un produit logiciel selon la revendication 9 dans un procédé selon une ou plusieurs des revendications 1 à 7.

11. Support de stockage sur lequel est enregistré le programme informatique selon la revendication 9, comprenant un ensemble de données comprenant au moins un ensemble de valeurs de référence qui reproduisent chacune une valeur cible d'une relation entre une rigidité totale (C_{cible}) à atteindre numériquement et/ou analytiquement et une force de précontrainte de montage (Fₘ), l'ensemble de valeurs de référence étant déterminé à partir des étapes consistant à :
a. déterminer des paramètres de bride d'au moins la première bride et la deuxième bride de la connexion à brides,
b. déterminer analytiquement un comportement à l'allongement typique du système de broches, déterminer d'une rigidité axiale (C_{broche}) pour la broche et déterminer une rigidité axiale du corps de bride de la connexion à brides précontrainte,
c. effectuer une étude analytique et/ou numérique visant à déterminer les dimensions maximales admissibles des interstices (Sₙ), de sorte qu'une dégradation par fatigue du système de broches, compte tenu de conditions aux limites spécifiques, ne dépasse pas un niveau de dégradation global défini,
d. déterminer analytiquement une rigidité totale à atteindre (C_{cible}) du corps de bride précontraint, en tenant compte des dimensions maximales admissibles des interstices (Sₙ) précédemment déterminées et de la force de précontrainte de montage (Fₘ), qui doit être atteinte pour garantir la résistance à la fatigue de la connexion pendant la précontrainte.
